(19) Europäisches Patentamt
European Patent Office
Office européen des brevets

(11) **EP 4 487 949 A1**

(12) **EUROPEAN PATENT APPLICATION**
published in accordance with Art. 153(4) EPC

(43) Date of publication:
**08.01.2025 Bulletin 2025/02**

(21) Application number: 23763545.3

(22) Date of filing: **02.03.2023**

(51) International Patent Classification (IPC):
**B01J 23/83** (2006.01)  **C01B 32/40** (2017.01)
**C01F 17/235** (2020.01)  **C01F 17/32** (2020.01)
**C01G 49/00** (2006.01)

(52) Cooperative Patent Classification (CPC):
**B01J 23/83; C01B 32/40; C01F 17/235;**
**C01F 17/32; C01G 49/00**

(86) International application number:
**PCT/JP2023/007871**

(87) International publication number:
**WO 2023/167288 (07.09.2023 Gazette 2023/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **03.03.2022  JP 2022032782**

(71) Applicant: **SEKISUI CHEMICAL CO., LTD.**
**Osaka-shi**
**Osaka**
**530-8565 (JP)**

(72) Inventors:
• **HATA, Risa**
**Tsukuba-shi, Ibaraki 300-4292 (JP)**
• **TAKIZAWA, Koji**
**Tsukuba-shi, Ibaraki 300-4292 (JP)**
• **IIJIMA, Keisuke**
**Tsukuba-shi, Ibaraki 300-4292 (JP)**

(74) Representative: **Alpspitz IP**
**Longinusstraße 1**
**81247 München (DE)**

(54) **REDUCING AGENT, AND GAS PRODUCTION METHOD**

(57)  [Summary]

[Problem] A reductant usable for reactions at high temperatures and a gas production method using the reductant are provided.

[Solution] According to an aspect of the present disclosure, a reductant that reduces carbon dioxide and generates a carbon valuable substance by contact is provided.

This reductant includes an oxygen carrier composed of metal oxide including cerium (Ce) and a transition element other than cerium (Ce), and having oxygen ion conductivity.

When performing X-ray diffraction measurement of the oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile.

EP 4 487 949 A1

**Description**

**BACKGROUND**

The present disclosure relates to a reducing agent (reductant) and a method for producing gas, and more specifically relates to a reductant that can be used for a chemical looping method, and a method for producing gas using the reductant.

RELATED ART

In recent years, an atmospheric concentration of carbon dioxide, which is a kind of greenhouse gas, has been kept increased. The increase in concentration of carbon dioxide in the atmosphere promotes the global warming. Therefore, it is important to collect carbon dioxide which is released into the atmosphere, and if the collected carbon dioxide can be converted into a valuable material, which can be reused, the carbon cycle society can be realized.

Conventionally, as a conventional method for producing carbon monoxide from carbon dioxide, a method utilizing a reverse water-gas shift reaction has been known. However, this conventional reverse water-gas shift reaction has a problem in that, since carbon monoxide and water coexist as products in the system, a conversion efficiency of carbon dioxide into carbon monoxide is low due to the restriction of the chemical equilibrium.

Then, in order to solve the above problem, conversion (synthesis) from carbon dioxide into carbon monoxide is carried out using a chemical looping method. The chemical looping method described here is a method in which the reverse water-gas shift reaction is divided into two reactions: a reduction reaction by hydrogen; and a generation reaction of carbon monoxide from carbon dioxide, and these reactions are bridged with an oxygen carrier (for example, metal oxide: $MO_x$) (see below formulae).

$$H_2 + MO_x \rightarrow H_2O + MO_{x-1}$$

$$CO_2 + MO_{x-1} \rightarrow CO + MO_x$$

Incidentally, in the above formulae, $MO_{x-1}$ indicates a state in which a part or all of the metal oxide has been reduced.

In the chemical looping method, since water and carbon monoxide, which are substrates of a reverse reaction, do not coexist in each of the reactions, the conversion efficiency from carbon dioxide into carbon monoxide may be higher than that of the chemical equilibrium of the reverse water-gas shift reaction.

In this chemical looping method, a reaction for converting carbon dioxide into carbon monoxide via oxygen deficiencies formed in an oxygen carrier has been conventionally carried out under a temperature condition of 650°C or less (see Patent Document 1).

PRIOR ART DOCUMENTS

Patent document

[Patent document 1] Ind. Eng. Chem. Res. 2013, 52, 8416-8426

**SUMMARY**

Problems to be Solved by Invention

According to the review of the present inventors, it was found that, since the reaction for generating the oxygen deficiencies in the crystal structure of the oxygen carrier by hydrogen is an endothermic reaction, the above-described reaction is preferably carried out at a higher temperature for generating these oxygen deficiencies efficiently. However, the research for the reaction for generating the oxygen deficiencies at a high temperature region (higher than 650°C) has been insufficient so far.

In the light of the above-described problem, the present disclosure has aimed to provide a reductant that can be used for reactions at high temperatures and a gas production method using the reductant.

Means for Solving Problems

According to an aspect of the present disclosure, a reductant that reduces carbon dioxide by contact so as to generate a carbon valuable substance is provided. The reductant is composed of metal oxide including cerium (Ce) and a transition element other than cerium (Ce), and contains an oxygen carrier having oxygen ion conductivity. When performing X-ray diffraction measurement of the oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile.

According to such an aspect, the reductant that can be used for reactions at high temperatures can be obtained.

**DETAILED DESCRIPTION**

Hereinafter, the reductant and the gas production method of the present disclosure will be described in detail by way of preferable embodiments.

[Reductant]

The reductant of the present disclosure is used for producing product gas that includes carbon monoxide (carbon valuable substance), by reducing carbon dioxide by contact with source gas that includes carbon dioxide (that is, used in the gas production method of the present disclosure). Further, the reductant oxidized by the contact with carbon dioxide can be reduced (regenerated) by contact with reduction gas including hydrogen (reducing substance).

At this time, it is preferable that the source gas and the reduction gas alternately pass through a reaction tube (reaction vessel) filled with the reductant of the present disclosure, thereby converting carbon dioxide into carbon monoxide by the reductant and regenerating the oxidized reductant by the reduction gas.

The reductant of the present disclosure includes an oxygen carrier having oxygen ion conductivity.

Herein, the oxygen carrier is a compound that can generate reversible oxygen deficiencies, and oxygen elements become deficient from the oxygen carrier itself by reduction, but when the oxygen carrier with oxygen elements deficient (in a reduction state) is brought in contact with carbon dioxide, the oxygen carrier withdraws oxygen elements from the carbon dioxide, thereby exhibiting an reducing action. The oxygen carrier in the present disclosure is composed of metal oxide that includes cerium (Ce) and a transition element other than cerium (Ce). In the above-described oxygen carrier, the generation of carbon monoxide from carbon dioxide can be promoted by a synergistic effect of Ce and the transition element.

In the present disclosure, when performing X-ray diffraction measurement of an oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile. That is, when performing the X-ray diffraction measurement of the oxygen carrier and cerium oxide in the same conditions, a peak position of at least one diffraction peak of the oxygen carrier corresponding to the (220) face is shifted with respect to the peak position of the diffraction peak of cerium oxide ($CeO_2$) corresponding to the (220) face in the X-ray diffraction profiles. Incidentally, timing of performing the X-ray diffraction measurement is before using the reductant for the reaction with the gas, that is, immediately after producing the reductant.

It indicates that, in the case where the peak shift of the certain diffraction peak corresponding to the (220) face appears in the X-ray diffraction profile as described above, a transition element other than Ce is solid-solved sufficiently in a crystal of cerium oxide.

By the solid-solving of the transition element other than Ce in the crystal of cerium oxide, a crystal structure of cerium oxide (oxygen carrier) can be distorted moderately. Thereby, it is considered that, since mobility of oxygen elements (oxygen ions) in the oxygen carrier can be increased, the oxygen carrier (reductant) can efficiently release oxygen elements by the contact with the reduction gas and induce oxygen deficiencies smoothly, so that the oxygen carrier can easily withdraw oxygen elements from carbon dioxide due to these induced oxygen deficiencies.

Further, it is also considered that, by the solid-solving of the transition element other than Ce, the crystal structure of cerium oxide can be stabilized, so that a heat resistance temperature thereof is increased. As a result, the reductant of the present disclosure can be used also at a high temperature of more than 650°C.

Moreover, in the case of solid-solving the transition element other than Ce in the crystal of cerium oxide, the crystal structure of cerium oxide is considered to be more stable when the reductant is used at more than 650°C than at 650°C or less. At the high temperature of more than 650°C, Ce is alloyed with the transition metal so as to be likely to have a stable crystal structure, whereby the reductant is likely to maintain its initial activity even after repeated oxidation and reduction.

Incidentally, the diffraction peak of the oxygen carrier corresponding to the (220) face may be shifted in either direction to a high-angle side or a low-angle side with respect to the diffraction peak of cerium oxide ($CeO_2$) corresponding to the (220) face. The shifting direction of the diffraction peak of the oxygen carrier corresponding to the (220) face, whether to the high-angle side or to the low-angle side and its shift amount are considered to be affected by, for example, the conditions in producing the reductant (in particular, pulverization time, sintering temperature and sintering time).

The shift amount of the peak position of the diffraction peak of the oxygen carrier corresponding to the (220) face with respect to the peak position of the diffraction peak of cerium oxide ($CeO_2$) corresponding to the (220) face (220) face is preferably 0.1° or more and less than 0.6° in $2\Theta$. A lower limit of the shift amount of the peak position may be 0.15° or more, 0.2° or more, 0.25° or more, 0.3° or more, 0.35° or more, or 0.4° or more in $2\Theta$. Whereas, an upper limit of the shift amount of the peak position may be 0.55° or less in $2\Theta$. Incidentally, the lower limit and the upper limit can be arbitrarily combined to specify a preferable range of the shift amount of the peak position. By setting the shift amount of the peak position within the above-described range, the transition element other than Ce can be considered to be solid-solved in the crystal of cerium oxide more sufficiently and securely

Incidentally, when the shift amount of the peak position becomes too large, a fluorite structure, which is the crystal structure of cerium oxide, is not necessarily maintained.

In the X-ray diffraction profile, the certain diffraction peak of the oxygen carrier corresponding to the (220) face exists preferably in a range from 44° or more and 52° or less, more preferably from 46° or more and 50° or less, further preferably from 47° or more and 49° or less, and particularly preferably from 47.6° or more and 48° or less in $2\Theta$. This specific diffraction peak is equivalent to the diffraction peak of the crystal of cerium oxide, in which the transition element are solid-solved, corresponding to the (220) face.

The diffraction peak (in particular, the specific diffraction peak) of the oxygen carrier corresponding to the (220) face has a full width at half maximum, which is preferably 0.3 or more, more preferably 0.35 or more, and further preferably 0.4 or more. Incidentally, the full width at half maximum is preferably 0.7 or less, and more preferably 0.65 or less. This means that increase in crystallite size of the oxygen carrier is suppressed, in other words, the crystallite size of the oxygen carrier is kept relatively small. In the oxygen carrier with a relatively small crystallite size, moving distances of oxygen elements are short, so that both of the reduction reaction of the reductant by the reduction gas (induced reaction of the oxygen deficiencies) and the reduction reaction of carbon dioxide by the reductant can be promoted.

A specific value of the crystallite size of the oxygen carrier is preferably 320 Å or less, more preferably 300 Å or less, further preferably 280 Å or less, particularly preferably 270 Å or less, and most preferably 260 Å or less. The oxygen carrier with such a small crystallite size is preferable, because moving distances of the oxygen elements can be shorter. Incidentally, a lower limit of the crystallite size is not particularly limited, but is preferably 210 Å or more, more preferably 220 Å or more, further preferably 230 Å or more, and particularly preferably 250 Å or more. The reductant including the oxygen carrier having a crystallite size that is less than the above-described lower limit tends to be hard to be manufactured. Incidentally, the lower limit and the upper limit can be arbitrarily combined to specify a preferable range of the crystallite size of the oxygen carrier.

As a result of the study, the inventors of the present disclosure has found a high correlation not only between: the full width at half maximum; and the absolute value of the crystallite size, but also between: a ratio of peak intensity with respect to the full width at half maximum (the peak intensity/ the full width at half maximum) of the diffraction peak of the oxygen carrier corresponding to the (220) face; and the above-described reactivity of the reductant. A specific value of the peak intensity/ the full width at half maximum is preferably 6.2 or less, more preferably 6 or less, further preferably 5.5 or less or 5 or less, particularly preferably 4.5 or less, and most preferably 4 or less. A lower limit of the peak intensity/ the full width at half maximum is preferably 2.5 or more, and more preferably 3 or more. When the value of the peak intensity/the full width at half maximum is less than the above-described lower limit, crystallinity of the oxygen carrier becomes too low, and oxygen elements hardly move.

Herein, the specific diffraction peak is a peak having a maximum intensity that is observed in the range from 45° or more to 49° or less in $2\Theta$ in the X-ray diffraction profile. With respect to this peak, the ratio of the peak intensity to the full width at half maximum (peak intensity/ full width at half maximum) is specified.

The oxygen carrier include the transition element other than Ce. By the including of the additional transition element in the oxygen carrier, the crystal structure of the oxygen carrier can be distorted moderately. As a result, the movement of oxygen elements into and out of the oxygen carrier can be smoother.

Incidentally, a ratio of a molar amount (molar ratio) of cerium to a total molar amount of metallic elements included in the oxygen carrier (metal oxide) is not particularly limited, but is preferably 0.6 or more, more preferably 0.65 or more, and further preferably 0.7 or more. Incidentally, an upper limit of the molar ratio is generally 0.98 or less.

The transition element is preferably at least one of the elements belonging to the fourth period or the fifth period of the periodic table. Such elements have ionic radiuses which are relatively close to that of Ce, and thus can prevent or suppress that the crystal of the oxygen carrier becomes unstable due to the difference in ionic radius.

Examples of the transition elements include scandium (Sc), vanadium (V), chromium (Cr), iron (Fe), manganese (Mn), nickel (N), cobalt (Co), copper (Cu), zinc (Zn), zirconium (Zr), niobium (Nb), molybdenum (Mo), ruthenium (Ru), rhodium (Rh), palladium (Pd), hafnium (Hf), tungsten (W), titanium (Ti) and the like. These transition elements can be used alone or in combination of two kinds or more. Among them, the transition element is preferably one of Fe, Mn and Zr, and more preferably Fe and/or Zr. Since ionic radiuses of these transition elements are smaller than that of cerium, the crystal structure of the oxygen carrier can be distorted more moderately, thereby further improving the above-described effect.

In addition to the above-described transition elements, the oxygen carrier can also include elements other than the transition element.

The reductant of the present disclosure may be composed of the oxygen carrier alone, or may include the oxygen carrier and a binder for binding the oxygen carrier. As the latter aspect, a form in which fine particles of the oxygen carrier are bound together with a binder (support). In this case, a shape retention property of the reductant can be more enhanced, and the a specific surface area of the reductant can be adjusted easily.

In the case where the reductant includes the binder, proportion of the binder is preferably 60 parts by mass, more preferably 50 parts by mass, and further preferably 40 parts by mass with respect to 100 parts by mass of the reductant. Also, the proportion of the binder may be 1 part by mass or more, 2 parts by mass or more, 3 parts by mass or more, 4 parts by mass or more, 5 parts by mass or more, 6 parts by mass or more, 7 parts by mass or more, 8 parts by mass or more, 9 parts by mass or more, or 10 parts by mass or more. Incidentally, the lower limit and the upper limit can be arbitrarily combined to specify a preferable range of the proportion of the binder. By setting the amount of the binder to be included in the reductant within the above range, the conversion efficiency of carbon dioxide into carbon monoxide by the reductant can be further improved, while maintaining the high shape retention property of the reductant.

As the binder, any compounds, which are not limited unless they are likely to be denatured by contact with the source gas, depending on reaction conditions or the like, can be used, and for example, inorganic materials such as oxide, nitride, oxynitride and carbide, carbon materials (graphite, graphene and the like) and the like can be exemplified.

Among them, the binder is preferably oxide, more preferably oxide including at least one kind of magnesium (Mg), titanium (Ti), zirconium (Zr), aluminum (Al) and silicon (Si), and further preferably aluminum oxide. These oxides are preferable because their thermal stability are high and they bind the fine particles of the oxygen carrier easily and stably.

Packing density of the reductant is preferably 4 g/mL or less, more preferably 0.5 g/mL or more and 3 g/mL or less, and further preferably 1 g/mL or more and 2.5 g/mL or less. If the packing density is too low, passing speed of gas becomes too high, so that a period of time for the reductant to be in contact with the source gas and the reduction gas is shorten. As a result, the conversion efficiency of carbon dioxide into carbon monoxide by the reductant, and a regeneration efficiency of the oxidized reductant by the reduction gas are likely to be decreased. On the other hand, if the packing density is too high, the passing speed of the gas becomes too low, so that the reaction is hard to proceed, or production of the product gas requires a long period of time.

Pore volume of the reductant is preferably 0.1 $cm^3$/g or more, more preferably 1 $cm^3$/g or more and 30 $cm^3$/g or less, and further preferably 5 $cm^3$/g or more and 20 $cm^3$/g or less. If the pore volume is too small, the source gas and the reduction gas are hard to enter inside of the reductant. As a result, a contact area of the reductant with the source gas and the reduction gas is decreased, so that the conversion efficiency of carbon dioxide into carbon monoxide by the reductant and the regeneration efficiency of the oxidized reductant by the reduction gas are likely to be decreased. On the other hand, even if the pore volume is increased beyond the higher limit, any further improvement in effects cannot be expected, and mechanical strength of some kinds of the reductants tends to be lowered.

A shape of the reductant is not particularly limited, but for example, a granular shape is preferable. If the reductant is granular-shaped, the packing density of the reductant can be adjusted easily within the above-described range.

Herein, the granular shape conceptually includes powder, particles, blocks, pellets and the like, and a form thereof may be any of spherical, plate, polygonal, crushed, columnar, needle, scaled and the like.

An average particle diameter of the reductant is preferably 1 pm or more and 5 mm or less, more preferably 10 pm or more and 1 mm or less, and further preferably 20 pm or more and 0.5 mm or less. The reductant having the above-described average particle diameter, the packing density thereof can be adjusted easily within the above-described range.

Incidentally, in the present specification, an average particle diameter denotes an average value of particle diameters of arbitrary 200 reductant particles in one visual field which is observed with an electron microscope. Herein, the "particle diameter" denotes the maximum length of a distance between two points on an outline of the reductant. Incidentally, in the case where the reductant is columnar-shaped, the maximum length of a distance between two points on outlines of end surfaces is denoted by the "particle diameter". Further, in the case where the reductant is, for example, block-shaped, and primary particles are aggregated, the average particle diameter denotes an average particle diameter of secondary particles. A BET specific surface area of the reductant is preferably 1 $m^2$/g or more and 500 $m^2$/g or less, more preferably from 3 $m^2$/g or more and 450 $m^2$/g or less, and further preferably 5 $m^2$/g or more and 400 $m^2$/g or less. By setting the BET specific surface area within the above-described range, the conversion efficiency of carbon dioxide into carbon monoxide by the reductant can be increased easily.

Moreover, in the present disclosure, since the transition element other than Ce are stably solid-solved in the oxygen carrier (cerium oxide), oxygen capacity of the reductant can be maintained to be high over a wide range of temperatures from low (about 400°C) to high (about 850°C). That is, the reductant of the present disclosure can efficiently convert carbon dioxide into carbon monoxide in a wide range of temperatures, and can be efficiently reduced by the reduction gas including hydrogen. The oxygen capacity of the oxygen carrier included in the reductant at 400°C is preferably 0.1% by mass or more and 40% by mass or less , and more preferably 0.5% by mass or more and 30% by mass or less. If the oxygen capacity of the oxygen carrier included in the reductant at the low temperature is within the above-described range, the oxygen capacity even at a temperature during an actual operation (temperature of more than 650°C) is meant to be sufficiently high, thereby proving that the reductant has the extremely high conversion efficiency of carbon dioxide into carbon monoxide.

[Method for producing reductant.]

Next, a method for producing the reductant will be described.

The method for producing the reductant is not limited particularly, but for example, a sol-gel method, a coprecipitation method, a solid phase method, a hydrothermal synthesis method and the like can be exemplified.

The reductant can be produced, for example, as follows. Firstly, salts of the metallic elements that compose the reductant (in the case of using the above-described inorganic binder, salts of the elements that compose the inorganic binder may be included) are dissolved into water so as to prepare aqueous solution. Next, this aqueous solution is gelated, and is subsequently dried and sintered. That is, the reductant of the present disclosure can be easily and securely produced by the so-called sol-gel method.

Incidentally, for the preparation of the aqueous solution, acidic water that is adjusted to be acid with, for example, citric acid, acetic acid, malic acid, tartaric acid, hydrochloric acid, nitric acid, and a mixture thereof may be used.

As the salts of the metallic elements, for example, nitrate, sulfate, chloride, hydroxide, carbonate, and composites thereof can be exemplified, but nitrate is preferable among them. In addition, as the salts of the metallic elements, hydrate may also be used as necessary.

The drying of the gel is preferably carried out at a temperature of 20°C or more and 200°C or less, and more preferably 50°C or more and 150°C or less, for preferably 0.5 hours or more and 20 hours or less, and more preferably 1 hour or more and 15 hours or less. By drying as described above, the gel can be dried uniformly.

The sintering of the gel is preferably carried out at a temperature of 300°C or more and 1200°C or less, and more preferably at 700°C or more and 1000°C or less, for preferably 1 hour or more and 24 hours or less, and more preferably 1.5 hours or more and 20 hours or less. The gel is preferably transformed into oxide by the sintering, and can be easily converted into the reductant by the sintering in the above-described conditions. In addition, if sintering in the above-described conditions, the reductant can also be prevented from excessive particle growth.

Until reaching the above-described sintering temperature, the temperature is increased preferably at a temperature increase rate of 1°C/minute or more and 20°C/minute or less, and more preferably of 2°C/minute or more and 10°C/minute or less. Thereby, the particle growth of the reductant can be accelerated, and cracking of the crystals (particles) can also be avoided.

Further, the reductant can be produced also as follows.

Firstly, the oxides including the respective metallic elements that compose the reductant are pulverized while being mixed. For the pulverization, for example, ball mill, bead mill, jet mill, hammer mill and the like can be used. Moreover, this pulverization may be performed in either a dry process or a wet process.

If using the binder, the binder is mixed with the above-described oxides. As the binder, besides the above-described inorganic binders, organic binders can be used. As the organic materials, for example, various kinds of resin, such as olefin resin, acrylic resin, styrene resin, ester resin, ether resin and vinyl resin, various kinds of wax, various kinds of fatty acid and the like can be exemplified. Further, in this case, the above-mentioned oxides produced by a sol-gel method, a coprecipitation method, a solid phase method, a hydrothermal method and the like can be used as the oxides.

Next, a block object is pulverized and then sintered. This sintering is carried out preferably at a temperature of 300°C or more and 1200°C or less, and more preferably 700°C or more and 1000°C or less, for preferably 1 hour or more and 24 hours or less, and more preferably 1.5 hours or more and 20 hours or less.

At this time, a part or all of the organic binder may be lost by the sintering.

Thereafter, the sintered block subject is pulverized similarly to the above, thereby obtaining the reductant.

[Method of using reductant]

The reductant of the present disclosure can be used by, for example, the chemical looping method as described above. In addition, the reductant of the present disclosure can also be used for the purpose of generating carbon monoxide (carbon valuable substance) by reducing carbon dioxide by the contact as described above.

More specifically, it is preferable to carry out a reduction reaction of carbon dioxide and a reduction reaction of the reductant, and the reductant is preferably used to be circulated between the reduction reaction of carbon dioxide and the reduction reaction of the reductant. Incidentally, in the reduction reaction of the reductant, reduction gas including another reducing substance is used.

In addition, the reductant of the present disclosure is preferably used in the so-called reverse water-gas shift reaction. The reverse water-gas shift reaction is a reaction for generating carbon monoxide and water from carbon dioxide and hydrogen. In the case of applying the chemical looping method, the reverse water-gas shift reaction is performed being divided into the reduction reaction of the reductant (first process) and the reduction reaction of carbon dioxide (second process), where the reduction reaction of the reductant is a reaction shown by Formula (A) below, and the reduction reaction of carbon dioxide is a reaction shown by Formula (B) below.

$$H_2 \text{ (gas)} + MO_x \text{ (solid)} \rightarrow H_2O \text{ (gas)} + MO_{x-1} \text{ (solid)} \qquad (A)$$

$$CO_2 \text{ (gas)} + MO_{x-1} \text{ (solid)} \rightarrow CO \text{ (gas)} + MO_x \text{ (solid)} \qquad (B)$$

Incidentally, in Formulae (A) and (B), x is usually 2.

That is, in the reduction reaction of the reductant, hydrogen, which is a kind of a reductant, is oxidized to generate water. Further, in the reduction reaction of carbon dioxide, carbon dioxide is reduced to generate carbon monoxide, which is a kind of a carbon valuable substance.

A reaction temperature (contact temperature of the reductant with the reduction gas) in the reduction reaction of the reductant may be a temperature at which the reduction reaction can proceed, but is preferably more than 650°C, more preferably 700°C or more, further preferably 750°C or more, and particularly preferably 800°C or more. In the above-described temperature range, the efficient reduction reaction of the reductant can proceed.

An upper limit of the reaction temperature is preferably 1050°C or less, more preferably 1000°C or less, further preferably 950°C or less, particularly preferably 900°C or less, and most preferably 850°C or less. By setting the upper limit of the reaction temperature within the above-described range, the economical efficiency can be improved.

Incidentally, the lower limit and the upper limit can be arbitrarily combined to specify a preferable range of the reaction temperature.

Moreover, an amount of hydrogen (reduction gas) to brought in contact with the oxidized reductant in the reduction reaction of the reductant is preferably 1 mmol or more and 50 mmol or less, more preferably 2.5 mmol or more and 35 mmol or less, and further preferably 5 mmol or more and 20 mmol or less per 1 g of the reductant. The reductant of the present disclosure has a high hydrogen utilization rate, because oxygen elements move into and out of the reductant smoothly. Therefore, the reductant of the present disclosure is sufficiently reduced (regenerated) by a small amount of hydrogen. Thus, the reductant of the present disclosure contributes to saving of energy required for generating hydrogen and, in turn, reducing of carbon dioxide generated for obtaining the energy.

Incidentally, the hydrogen utilization rate (%) is a ratio of an amount of generated carbon monoxide (mole) to an input amount (mole) of hydrogen that is brought in contact with 1 g of the reductant, which is represented as a percentage.

Furthermore, by bringing the reductant in contact with the reduction gas that includes hydrogen in the reduction reaction of the reductant, a reversible oxygen deficiency amount is generated at predetermined proportion in the reductant. This specific proportion is preferably 1.6% or more, more preferably 2% or more, and further preferably 2.5% or more with respect to the mass of the oxygen carrier included in the reductant. By generating the oxygen defects at the above-described proportion, the conversion of carbon dioxide into carbon monoxide can further promote. An upper limit of the oxygen deficiency amount is not particularly limited, but is usually about 10%.

Incidentally, the oxygen deficiency amount can be obtained by a method described below in the examples.

Moreover, the reaction temperature (contact temperature of the reductant with the carbon dioxide) in the reduction reaction of carbon dioxide is preferably more than 650°C, more preferably 700°C or more, further preferably 750°C or more, and particularly preferably 800°C or more. In the above-described temperature range, the efficient reduction reaction of carbon dioxide can proceed.

An upper limit of the reaction temperature is preferably 1050°C or less, more preferably 1000°C or less, further preferably 950°C or less, particularly preferably 900°C or less, and most preferably 850°C or less. Since the reductant can cause the reduction reaction of carbon dioxide to carbon monoxide with high efficiency even at low temperatures, the temperature of the reduction reaction of carbon dioxide can be set to be relatively low. Further, by setting the upper limit of the reaction temperature within the above-described range, not only waste heat utilization is facilitated, but also the economic efficiency can be further improved .

Incidentally, the lower limit and the upper limit can be arbitrarily combined to specify a preferable range of the reaction temperature.

Moreover, an amount of carbon dioxide that is brought in contact with the reductant in the reduction reaction of carbon dioxide is preferably 1 mmol or more and 50 mmol or less, more preferably 2.5 mmol or more and 30 mmol or less, and further preferably 5 mmol or more and 20 mmol or less per 1 g of the reductant. According to the reductant of the present disclosure, oxygen elements move into and out of the reductant smoothly. Therefore, the reductant of the present disclosure has a high conversion efficiency of carbon dioxide into carbon monoxide (that is, the generation amount of carbon monoxide is large), thereby contributing to the reduction of carbon dioxide. Whereas, since the reduction reaction is efficiently carried out by the reduction gas that includes hydrogen, the reductant can be regenerated with a small amount of hydrogen. An amount of the carbon monoxide generated by the reductant of the present disclosure is preferably about 0.3 mmol or more and 1 mmol or less per 1 g of the reductant.

In the present disclosure, the reduced products (carbon valuable substance) obtained by the reduction reaction of carbon dioxide include carbon monoxide, and may also include materials other than carbon monoxide or a mixture of carbon monoxide and the other materials. As the other materials, for example, methane can be exemplified. The reduced products such as carbon monoxide obtained by the reduction reaction of carbon dioxide is preferably converted into an organic material or the like by microbial fermentation or the like. As the microbial fermentation, anaerobic fermentation can be exemplified. As the organic material to be obtained, methanol, ethanol, acetic acid, butanol, derivatives thereof, mixtures thereof, compounds of C5 or more such as isoprene, and the like can be exemplified.

In addition, the reduced product such as carbon monoxide may be converted into C1 to C20 compounds including hydrocarbon or alcohol which is synthesized by conventional petrochemistry by metal oxide or the like. As a specific compound to be obtained, methane, ethane, propylene, methanol, ethanol, propanol, acetaldehyde, diethylether, acetic acid, butyric acid, diethyl carbonate, butadiene and the like can be exemplified.

[Property of reductant]

The reductant of the present disclosure preferably has following properties.

That is, when a reaction tube of stainless steel with an inner diameter of 8 mm, in which a pressure gauge is disposed in a flow channel, is filled with the reductant to a height of 40 cm, and nitrogen gas with a concentration of 100 vol% is allowed to pass through the reaction tube at 30 mL/min, pressure increase after 10 minutes is preferably 0.03 MPaG or less, and more preferably 0.01 MPaG or less.

The reductant exhibiting the above-described properties can be judged to have the packing density and the pore volume satisfying the above-described ranges, and can sufficiently increase the conversion efficiency of carbon dioxide into carbon monoxide.

The above-described present disclosure can provide: the reductant that can be used for reactions at high temperatures; and the gas production method using this reductant. The reductant of the present disclosure can withstand its use at high temperatures, and thus can convert carbon dioxide into carbon monoxide (carbon valuable substance) more efficiently by the chemical looping reaction at high temperatures.

In addition, the present disclosure may be provided in each of the following aspects.

(1) A reductant that reduces carbon dioxide and generates a carbon valuable substance by contact, the reductant comprising an oxygen carrier which is composed of metal oxide including cerium (Ce) and a transition element other than cerium (Ce), and has oxygen ion conductivity, wherein, when performing X-ray diffraction measurement of the oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile.

(2) The reductant according to (1), wherein a shift amount of the peak position of the diffraction peak of the oxygen carrier corresponding to the (220) face with respect to the peak position of the diffraction peak of cerium oxide ($CeO_2$) corresponding to the (220) face is 0.1° or more and less than 0.6° in $2\Theta$.

(3) The reductant according to (1) or (2), wherein the diffraction peak of the oxygen carrier corresponding to the (220) face has a full width at half maximum of 0.3 or more.

(4) The reductant according to any one of (1) to (3), wherein a crystallite size of the oxygen carrier is 320 Å or less.

(5) The reductant according to any one of (1) to (4), wherein a ratio of peak intensity to the full width at half maximum of the diffraction peak of the oxygen carrier corresponding to the (220) face is 6.2 or less.

(6) The reductant according to any one of (1) to (5), wherein the transition element is at least one of elements belonging to a fourth period or a fifth period of a periodic table.

(7) The reductant according to any one of (1) to (6), wherein the carbon valuable substance includes carbon monoxide.

(8) The reductant according to any one of (1) to (7), wherein the contact with carbon dioxide is carried out at a temperature of more than 650°C.

(9) The reductant according to any one of (1) to (8), which is oxidized by the contact with carbon dioxide, and is subsequently reduced by contact with reduction gas including hydrogen.

(10) The reductant according to (9), wherein the contact with the reduction gas including hydrogen is carried out at a temperature of more than 650°C.

(11) The reductant according to (9) or (10), which generates a reversible oxygen deficiency amount that is 0.45% or more with respect to a mass of the oxygen carrier included in the reductant, by the contact with the reduction gas including hydrogen.

(12) The reductant according to any one of claim 1 to 11, further comprising a binder that binds the oxygen carrier.

(13) The reductant according to (12), wherein proportion of the binder included in the reductant is 1 part by mass or more and 60 parts by mass or less with respect to 100 parts by mass of the reductant.

(14) A gas production method for producing product gas that includes a carbon valuable substance by reducing carbon dioxide by bringing a reductant in contact with source gas that includes carbon dioxide, wherein the reductant includes an oxygen carrier composed of metal oxide that includes cerium (Ce) and a transition element other than cerium (Ce) and having oxygen ion conductivity, and, when performing X-ray diffraction measurement of the oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile.

Needless to say, the present disclosure is not limited to those.

Various embodiments of the present disclosure have been described, but as described, these are presented as examples and are not intended to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the invention described in claims and the equivalent scope thereof.

For example, the reductant and the gas production method of the present disclosure may have any other arbitrary additional configuration to the above embodiments, may be substituted with any arbitrary configuration that performs similar functions, and some configurations may be omitted.

In the above embodiment, the gas including hydrogen is described as a representative of the reduction gas, but, instead of or in addition to hydrogen, gas containing at least one kind selected from hydrocarbons (for example, methane, ethane, acetylene and the like) and ammonia can be used as a reducing substance in the reduction gas.

[Example]

Hereinafter, the present disclosure will be described more specifically by way of examples and comparative examples, but is not limited to these examples.

1. Production of reductant

(Example 1)

Firstly, predetermined amounts of cerium oxide (produced by KOJUNDO CHEMICAL LABORATORY CO.,LTD.), manganese(IV) oxide (produced by FUJIFILM Wako Pure Chemical Corporation) and iron(III) oxide (produced by FUJIFILM Wako Pure Chemical Corporation) were weighed, respectively. Subsequently, the weighed particles of the respective oxide, 100 mL of ion exchanged water, and 4 mmΦ zirconia beads were stored into a zirconia container. Thereafter, they were pulverized at a rotation speed of 400 rpm for 24 hours using zirconia beads, and were subsequently dried at 120°C. Incidentally, a molar ratio of cerium oxide, manganese oxide and iron oxide was 0.94:0.04:0.02.

The thus obtained block object of the oxide was pulverized, was heated at a rate of 8°C/minute from a room temperature to 450°C under the air atmosphere, and was subsequently sintered at 450°C for 4 hours. Thereafter, the temperature was further increased at a rate of 8°C/minute to 950°C, and the oxide was sintered at 950°C for 8 hours. Finally, the sintered block object was mechanically and finely pulverized. Thereby, a reductant composed solely of the oxygen carrier, which was the target product, was obtained. Incidentally, the reductant was granular-shaped.

(Example 2)

A reductant was produced similarly to Example 1, except that the pulverization for 24 hours was changed to pulverization for 20 hours.

(Example 3)

Firstly, as a precursor of the reductant, predetermined amounts of cerium(III) nitrate hexahydrate (produced by FUJIFILM Wako Pure Chemical Corporation, purity: 98.0%), zirconium nitrate dihydrate (produced by FUJIFILM Wako Pure Chemical Corporation, purity: 97.0%), samarium nitrate hexahydrate (produced by FUJIFILM Wako Pure Chemical Corporation, purity: 99.5%), iron(III) nitrate nonahydrate (produced by FUJIFILM Wako Pure Chemical Corporation, purity: 99.9%) and copper(II) nitrate trihydrate (produced by FUJIFILM Wako Pure Chemical Corporation, purity: 99.0%) were weighed, respectively.

Next, 6.06 g of citric acid (produced by FUJIFILM Wako Pure Chemical Corporation, purity: 99.5%) was weighed, and then was dissolved into 96 mL of deionized water, thereby obtaining aqueous solution of citric acid. Thereafter, the above precursor (metal nitrate) was added into the aqueous solution of citric acid at the room temperature while being stirred, thereby preparing aqueous solution of the precursor. Incidentally, a molar ratio of Ce : Zr+Sm+Fe+Cu in the aqueous solution of the precursor was 0.70:0.30.

After 30 minutes, ethylene glycol (produced by FUJIFILM Wako Pure Chemical Corporation, purity: 99.5%) in an amount of 2.4 mol equivalent to the total metal nitrate was added into the aqueous solution of the precursor, and a temperature thereof was increased to 80°C.

The temperature was maintained at 80°C while being stirred continuously until viscous gel was formed. Thereafter, the gel was moved into a drying oven.

The gel was dried at 120°C for 5 hours.

The thus produced swelled block object of the organic and the inorganic compound was pulverized, was heated at a rate of 8°C/minute from the room temperature to 450°C under the air atmosphere, and was subsequently sintered at 450°C for 4 hours. Thereafter, the temperature was further increased at a rate of 8°C/minute to 950°C, and the block object was sintered at 950°C for 8 hours.

Finally, the sintered block object was mechanically and finely pulverized. Thereby, a reductant composed solely of the oxygen carrier, which was the target product, was obtained. Incidentally, the reductant was granular-shaped.

(Example 4)

A reductant was produced similarly to Example 3, except that a kind of the precursor of the reductant was changed.

As a precursor of the reductant, predetermined amounts of cerium(III) nitrate hexahydrate (produced by FUJIFILM Wako Pure Chemical Corporation, purity: 98.0%), zirconium nitrate dihydrate (produced by FUJIFILM Wako Pure Chemical Corporation, purity: 97.0%), lanthanum(III) nitrate hexahydrate (produced by FUJIFILM Wako Pure Chemical Corporation, purity: 99.9%), 30% aqueous solution of titanium(IV) sulfate (produced by FUJIFILM Wako Pure Chemical Corporation) and iron(III) nitrate nonahydrate (produced by FUJIFILM Wako Pure Chemical Corporation, purity: 99.9%) were weighed, respectively.

Incidentally, a molar ratio of Ce : Zr+La+Ti+Fe in the aqueous solution of the precursor was 0.64:0.36.

(Example 5)

A reductant was produced similarly to Example 3, except that a kind of the precursor of the reductant was changed.

As the precursor of the reductant, predetermined amounts of cerium(III) nitrate hexahydrate (produced by FUJIFILM Wako Pure Chemical Corporation, purity: 98.0%), zirconium nitrate dihydrate (produced by FUJIFILM Wako Pure Chemical Corporation, purity: 97.0%) and nickel(II) nitrate hexahydrate (produced by FUJIFILM Wako Pure Chemical Corporation, purity: 99.9%) were weighed, respectively.

Incidentally, a molar ratio of Ce:Zr:Ni in the aqueous solution of the precursor was 0.90:0.08:0.02.

(Example 6)

A reductant was produced similarly to Example 3, except that a kind of the precursor of the reductant was changed.

As the precursor of the reductant, predetermined amounts of cerium(III) nitrate hexahydrate (produced by FUJIFILM Wako Pure Chemical Corporation, purity: 98.0%), zirconium nitrate dihydrate (produced by FUJIFILM Wako Pure Chemical Corporation, purity: 97.0%) and niobium ammonium oxalate (produced by Sigma-Aldrich, purity: 99.9%) were weighed, respectively.

Incidentally, a molar ratio of Ce:Zr:Nb in the aqueous solution of the precursor was 0.90:0.08:0.02.

(Example 7)

A reductant was produced similarly to Example 3, except that a kind of the precursor of the reductant was changed.

As a precursor of the reductant, predetermined amounts of cerium(III) nitrate hexahydrate (produced by FUJIFILM Wako Pure Chemical Corporation, purity: 98.0%), 30% aqueous solution of titanium(IV) sulfate (produced by FUJIFILM Wako Pure Chemical Corporation) and lanthanum(III) nitrate hexahydrate (produced by FUJIFILM Wako Pure Chemical Corporation, purity: 99.9%) were weighed, respectively.

Incidentally, a molar ratio of Ce:Ti:La in the aqueous solution of the precursor was 0.58:0.25:0.17.

(Example 8)

The oxygen carrier obtained in Example 3 was mixed with weighed aluminum oxide (Produced by FUJIFILM Wako Pure Chemical Corporation, Wako special grade) as a binder for 10 minutes in a mortar. Then, the mixture was heated at a rate of 8°C/minute from the room temperature to 950°C under the air atmosphere, and was subsequently sintered at 950°C for 8 hours. Thereby, the reductant was obtained.

Incidentally, the proportion of aluminum oxide included in the reductant was 10 parts by mass with respect to 100 parts by mass of the reductant.

(Comparative example 1)

A reductant was obtained by tableting simple cerium oxide.

Incidentally, packing density of the reductants obtained in Examples 1 to 3 was 2 g/mL or more and 2.5 g/mL or less.

2. Identification of reductant

A metal composition in the reductant (metal oxide) was analyzed and identified by an ICP emission spectral analysis with argon gas using SPECTRO ARCOS produced by AMETEK Inc.

Measurement solution was prepared by a following procedure. 50 mg to 100 mg of the reductant was dissolved into 100 mL of 1% nitric acid or 1% hydrofluoric acid, and the obtained solution was further diluted by 10 times.

Results of the analysis of the above-described measurement solution (molar ratio of the metallic elements) will be shown in Table 1.

3. Measurement of particle size distribution

Particle size distribution of the reductant was measured using a particle size distribution measurement device (product name of "LA-960S", produced by HORIBA, Ltd.). Incidentally, water was used as solvent, and the measurement was performed with a transmission rate of 70% or more.

As a result, each volume-based 50% diameter of the reductant was 50 pm or less.

4. X-ray diffraction measurement

Before performing an X-ray diffraction measurement, a sample of the reductant was prepared.

Firstly, about 100 mg of the reductant was measured into a mortar, and was ground with a pestle. Thereafter, the reductant was prepared to be filled into a hole of a sample filling portion of a sample plate uniformly so that a surface of the sample plate and a surface of the reductant were able to constitute the same plane. For the X-ray diffraction measurement, an X-ray diffractometer (product name of "D8 DISCOVER", produced by Bruker Corporation) was used, and the measurement was performed by a concentration method. A copper tube bulb made of pure copper was used for an anticathode, and characteristic X-rays of CuK$\alpha$ (wavelength ($\lambda$) of K$\alpha$1 = 1.54056 Å (0.154056 nm), wavelength ($\lambda$) of K$\alpha$2 = 1.54439 Å (0.154439 nm) and K$\alpha$2 ratio = 0.50000) were used for diffraction.

A diffractometer was set with a divergence slit to 1/2°, a divergence longitudinal limit slit to 10 mm, a scattering slit to 2° and a photoreception slit to 0.15 mm. A radius of a goniometer was 169.3 mm.

Thereafter, the sample of the prepared reductant was irradiated with X-rays in conditions of a tube voltage of 40 kV and a tube current of 40 mA. Incidentally, the measurement was performed by the goniometer with a scanning angle set within a range from 5.5° to 100.5°, scanning speed set at 3.5°/minute and a measurement step set at 0.01. The measurement was performed at the room temperature in the atmosphere. After completion of the measurement, data obtained without separation processing of K$\alpha$1 and K$\alpha$2 was analyzed.

For the analysis of the data, a software (product name of DIFFRAC. EVA, produced by Bruker) was used.

A background was removed, and the highest intensity value of a diffraction peak corresponding to the (220) face was determined as an apex, and an angle of the apex at this time was determined as a peak position. In addition, an interval between two points at half intensity of the maximum peak value was determined as a full width at half maximum. In the diffraction peak corresponding to the (220) face, the peak intensity (unit: cps) after the background removal was used for calculating a ratio of the peak intensity to the full width at half maximum.

[Methods for measuring crystallite size]

Based on the diffraction peak corresponding to the (220) face in the X-ray diffraction profile measured using the characteristic X-ray of CuK$\alpha$ (wavelength ($\lambda$) of K$\alpha$1 = 1.54056Å (0.154056 nm), wavelength ($\lambda$) of K$\alpha$2 = 1.54439Å (0.154439 nm) and ratio of K$\alpha$2 = 0.5000), a crystallite size was obtained by a Scherrer's formula represented by Formula (1s) below.

$$D = K \cdot \lambda / \beta \cos\theta \qquad \ldots(1s)$$

$$\beta = B_{obs} - b$$

[In the formula, D denotes the crystallite size (Å), $\lambda$ denotes a measured X-ray wavelength (Å), $\beta$ denotes a spread of a diffraction line width according to the crystallite size, $\theta$ denotes a diffraction angle, K denotes a Scherrer constant, $B_{obs}$ denotes a measured half width, and b denotes a spread of a line width according to the X-ray diffractometer. Herein, the calculation was performed based on that K was 0.890 and b was 0.050, respectively.]

5. Generation amount of carbon monoxide (CO generation amount)

Using a rapid catalyst evaluation system provided with a fixed-bed flow reactor and a gas chromatograph mass spectrometer (GC/MS) directly connected to the reactor was used to measure an amount of carbon monoxide generated by the reductant in following procedures.

Specifically, a quartz reaction tube with an inner diameter of 4 mm was prepared, and was filled with a columnar-shaped reductant which was molded into a long diameter of 3 mm so that a laminate height was able to be 30 mm.

Thereafter, while flowing helium gas at a flow rate of 5 mL/minute, a temperature was increased at a rate of 15°C/minute to 850°C, and the same temperature was maintained for 5 minutes to stabilize the temperature. Then, in order to activate the oxygen carrier, hydrogen gas (reduction gas) was flown at a flow rate of 5 mL/minute for 20 minutes so as to cause a reduction reaction of the oxygen carrier (first process), thereby reducing the oxygen carrier. At this time, the gas discharged from an exhaust port contained water vapor.

Subsequently, after flowing helium gas at a flow rate of 5 mL/minute for 10 minutes for gas exchange, carbon dioxide gas was flown at a flow rate of 5 mL/minute for 20 minutes so as to cause a reduction reaction of carbon dioxide (second process), thereby reducing carbon dioxide gas (source gas). At this time, the product gas discharged from the exhaust port contained carbon monoxide.

Thereafter, a following process was conducted as a main experiment.

Firstly, helium gas was flown at a flow rate of 5 mL/minute for 10 minutes for gas exchange.

Subsequently, hydrogen gas (reduction gas) was flown at a flow rate of 3 mL/minute for 16 minutes so as to cause a reduction reaction of the reductant (first process), thereby reducing the reductant. At this time, the gas discharged from the exhaust port contained water vapor.

Subsequently, after flowing helium gas at a flow rate of 3 mL/minute for 5 minutes for gas exchange, carbon dioxide gas was flown at a flow rate of 3 mL/minute for 16 minutes so as to cause a reduction reaction of carbon dioxide (second process), thereby reducing carbon dioxide gas (source gas). At this time, the product gas discharged from the exhaust port contained carbon monoxide.

Incidentally, in the above processes, while any of the gas was flown, temperatures of the reductant were kept at 850°C and the processes were conducted under the atmospheric pressure conditions.

A generation amount of carbon monoxide was specified by a value obtained by dividing a total amount of carbon monoxide, which was generated, after allowing carbon dioxide gas (source gas) to pass through, from when the generation amount of carbon monoxide per unit second became 0.001 mmol or more, and until the generation amount became 0.001 mmol or less, by a weight (g) of the reductant.

Incidentally, for gas chromatograph mass spectrometry (GC/MS analysis), "QP-2020" produced by Shimadzu Corporation was used. Conditions in a GC section were as follows.

Column temperature: 200°C
Injection temperature: 200°C
Detector temperature: 250°C
Column: EGA tube (L: 2.5 m, $\Phi$(inner diameter): 0.15 mm, t: 0 mm)
Column flow rate: 0.55 mL/minute
Split ratio: 400
Purge flow rate: 5.0 mL/minute

In addition, an MS section (detection section) was used in a state of being calibrated in following conditions.

That is, detection signal intensity was adjusted so that a calibration curve was able to satisfy a relation of $R^2 > 0.98$, where the calibration curve was obtained by: plotting detection signal intensity obtained when flowing 1 mL, 2 mL and 3 mL of carbon dioxide using a mass flow controller which was calibrated with carbon dioxide, and had a discharge full scale of 10 mL/min or 50 mL/min, a flow rate accuracy of $\pm 1.0\%$ and a repeatability accuracy of $\pm 0.2\%$; and approximating the plots to a straight line passing the point of origin by a least squares method. Based on the above, a detection amount (amount of carbon dioxide generated per unit second) with respect to the detection signal intensity of carbon dioxide was calculated.

Also, a detection amount of carbon monoxide was measured similarly by following procedures. The detection signal intensity was adjusted so that a calibration curve was able to satisfy a relation of $R^2 > 0.98$, where the calibration curve was obtained by: plotting detection signal intensity obtained when flowing 1 mL, 2 mL, 3 mL and 5 mL of carbon monoxide using the mass flow controller; and approximating the plots to a straight line passing the point of origin by the least squares method. Based on the above, a detection amount (amount of carbon monoxide generated per unit second) with respect to the detection signal intensity of carbon monoxide was calculated.

Herein, the gas such as carbon dioxide and carbon monoxide was to be fed from a mass flow controller to the MS section via the GC section set into the above conditions, and when flowing carbon monoxide, the conversion factor was to be used to change the settings of the mass flow controller, where values of the conversion factors of carbon dioxide and carbon monoxide were 0.74 and 1.00, respectively.

The peak position of the diffraction peak corresponding to the (220) face, the full width at half maximum, the crystallite size, the peak intensity /the full width at half maximum and the generation amount of carbon monoxide will be listed in Table 1 below.

[Table 1]

EP 4 487 949 A1

14

Table 1

| | Reductant [100 parts by mass] | | | | | | Evaluation | | | | | |
|---|---|---|---|---|---|---|---|---|---|---|---|---|
| | Oxygen carrier | | | | | Binder [Parts by mass] | Peak position 2θ [°] | Shift amount 2θ [°] | Full width at half maximum | Crystallite size [Å] | Peak intensity/ Full width at half maximum | CO generation amount [mmol/g] |
| | Ce | Transition element | | | | | | | | | | |
| Example 1 | 0.94 | Mn | 0.04 | Fe | 0.02 | — | 47.66 | 0.15 | 0.388 | 253.3 | 3.09 | 0.730 |
| Example 2 | 0.94 | Mn | 0.04 | Fe | 0.02 | — | 48.04 | 0.53 | 0.445 | 218.3 | 3.28 | 1.141 |
| Example 3 | 0.7 | Zr+Sm+ Fe+Cu | | 0.3 | | — | 47.89 | 0.38 | 0.412 | 217.6 | 4.47 | 0.676 |
| Example 4 | 0.64 | Zr+La+ Fe+Ti | | 0.36 | | — | 47.99 | 0.48 | 0.750 | 122.8 | 1.02 | 0.774 |
| Example 5 | 0.9 | Zr | 0.08 | Ni | 0.02 | — | 47.78 | 0.27 | 0.366 | 271.9 | 3.14 | 0.630 |
| Example 6 | 0.9 | Zr | 0.08 | Nb | 0.02 | — | 47.80 | 0.29 | 0.358 | 279.0 | 3.32 | 0.688 |
| Example 7 | 0.58 | Ti | 0.25 | La | 0.17 | — | 47.57 | 0.06 | 0.405 | 241.8 | 3.14 | 0.508 |
| Example 8 | 0.7 | Zr+Sm+ Fe+Cu | | 0.3 | | $Al_2O_3$ 10 | 48.00 | 0.49 | 0.402 | 244.3 | 6.02 | 1.161 |
| Comparative Example 1 | 1 | — | | 0 | | — | 47.51 | — | 0.297 | 347.5 | 6.23 | 0.429 |

The amount of carbon monoxide generated by the reductant of each of Examples was larger than that of the reductant of the simple cerium oxide of Comparative Example 1.

5. Oxygen deficiency amount

The oxygen deficiency amounts of the reductants obtained in Example 1 and Comparative Example 1 were measured by thermogravimetry (TG). The oxygen deficiency amount (%) was obtained by dividing a difference between: a decreased mass of the reductant when being reduced by hydrogen; and an increased mass of the reductant when being re-oxidized by carbon dioxide, by a mass of the oxygen carrier included in the filled reductant, and then multiplying by 100.

Specifically, a sample container was firstly filled with 100 g of the reductant. Subsequently, a temperature was increased at 10°C/minute to 850°C or 650°C with helium flown.

Thereafter, while maintaining the temperature at 850°C or 650°C, mixed gas of hydrogen and helium (hydrogen: 10 vol%) at 100 mL/minute for 10 minutes was flown, whereby the reductant was reduced. After 10 minutes, helium gas was flown at 100 mL/minute for 30 minutes for gas exchange. A weight of the reductant at this time is denoted by "A".

Next, mixed gas of carbon dioxide and helium (carbon dioxide: 10 vol%) was flown at 100 mL/minute for 10 minutes, whereby the reductant was oxidized. After 10 minutes, helium gas was flown at 100 mL/minute for 30 minutes for gas exchange. A weight of the reductant at this time is denoted by "B".

Then, the oxygen deficiency amount (%) was obtained by (B-A/ mass of oxygen carrier included in reductant) x 100.

The oxygen deficiency amount will be listed below in Table 2.

[Table 2]

Table 2

| Reductant | Reaction temperature [°C] | Evaluation |
|---|---|---|
| | | Oxygen deficiency amount [%] |
| Example 1 | 850 | 2.46 |
| Example 1 | 650 | 1.00 |
| Comparative Example 1 | 650 | 0.44 |

The oxygen deficiency amount of the oxygen carrier included in the reductant of each of Examples was larger than that of the simple cerium oxide that composes the reductant of Comparative Example 1. This result corresponds reasonably well with the result that the conversion efficiency of carbon dioxide into carbon monoxide was high.

**Claims**

1. A reductant that reduces carbon dioxide and generates a carbon valuable substance by contact,

    the reductant comprising an oxygen carrier which is composed of metal oxide including cerium (Ce) and a transition element other than cerium (Ce), and has oxygen ion conductivity, wherein,
    when performing X-ray diffraction measurement of the oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile.

2. The reductant according to claim 1, wherein a shift amount of the peak position of the diffraction peak of the oxygen carrier corresponding to the (220) face with respect to the peak position of the diffraction peak of cerium oxide ($CeO_2$) corresponding to the (220) face is 0.1° or more and less than 0.6° in $2\Theta$.

3. The reductant according to claim 1 or 2, wherein the diffraction peak of the oxygen carrier corresponding to the (220) face has a full width at half maximum of 0.3 or more.

4. The reductant according to any one of claims 1 to 3, wherein a crystallite size of the oxygen carrier is 320 Å or less.

5. The reductant according to any one of claims 1 to 4, wherein a ratio of peak intensity to the full width at half maximum of the diffraction peak of the oxygen carrier corresponding to the (220) face is 6.2 or less.

6. The reductant according to any one of claims 1 to 5, wherein
the transition element is at least one of elements belonging to a fourth period or a fifth period of a periodic table.

7. The reductant according to any one of claims 1 to 6, wherein the carbon valuable substance includes carbon monoxide.

8. The reductant according to any one of claims 1 to 7, wherein
the contact with carbon dioxide is carried out at a temperature of more than 650°C.

9. The reductant according to any one of claims 1 to 8, which is oxidized by the contact with carbon dioxide, and is subsequently reduced by contact with reduction gas including hydrogen.

10. The reductant according to claim 9, wherein the contact with the reduction gas including hydrogen is carried out at a temperature of more than 650°C.

11. The reductant according to claim 9 or 10, which generates a reversible oxygen deficiency amount that is 0.45% or more with respect to a mass of the oxygen carrier included in the reductant, by the contact with the reduction gas including hydrogen.

12. The reductant according to any one of claim 1 to 11, further comprising a binder that binds the oxygen carrier.

13. The reductant according to claim 12, wherein proportion of the binder included in the reductant is 1 part by mass or more and 60 parts by mass or less with respect to 100 parts by mass of the reductant.

14. A gas production method for producing product gas that includes a carbon valuable substance by reducing carbon dioxide by bringing a reductant in contact with source gas that includes carbon dioxide, wherein

the reductant includes an oxygen carrier composed of metal oxide that includes cerium (Ce) and a transition element other than cerium (Ce) and having oxygen ion conductivity, and,
when performing X-ray diffraction measurement of the oxygen carrier, a peak position of at least one diffraction peak corresponding to a (220) face is shifted with respect to a peak position of a diffraction peak of cerium oxide ($CeO_2$) corresponding to a (220) face in an X-ray diffraction profile.

## INTERNATIONAL SEARCH REPORT

| International application No. |
| --- |
| **PCT/JP2023/007871** |

### A. CLASSIFICATION OF SUBJECT MATTER

***B01J 23/83***(2006.01)i; ***C01B 32/40***(2017.01)i; ***C01F 17/235***(2020.01)i; ***C01F 17/32***(2020.01)i; ***C01G 49/00***(2006.01)i
FI:   B01J23/83 M; C01B32/40; C01F17/235; C01F17/32; C01G49/00 A

According to International Patent Classification (IPC) or to both national classification and IPC

### B. FIELDS SEARCHED

Minimum documentation searched (classification system followed by classification symbols)

B01J23/83; C01B32/40; C01F17/235; C01F17/32; C01G49/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/192871 A1 (SEKISUI CHEMICAL CO., LTD.) 30 September 2021 (2021-09-30) claims 1-14, paragraphs [0030], [0087]-[0093], [0099]-[0105] | 1, 6-10, 12, 14 |
| A | | 2-5, 11, 13 |
| A | WO 2018/221357 A1 (JGC CATALYSTS AND CHEMICALS LTD.) 06 December 2018 (2018-12-06) claims 1-19, paragraphs [0268]-[0335] | 1-14 |
| A | JP 2010-264359 A (HONDA MOTOR CO., LTD.) 25 November 2010 (2010-11-25) entire text, all drawings | 1-14 |
| A | CN 102600854 A (SICHUAN UNIVERSITY) 25 July 2012 (2012-07-25) entire text, all drawings | 1-14 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 May 2023** | **23 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2" align="center">**INTERNATIONAL SEARCH REPORT**<br>Information on patent family members</td><td>International application No.<br><br>**PCT/JP2023/007871**</td></tr>
</table>

| Patent document<br>cited in search report | Publication date<br>(day/month/year) | Patent family member(s) | Publication date<br>(day/month/year) |
|---|---|---|---|
| WO 2021/192871 A1 | 30 September 2021 | CN 115335326 A | |
| WO 2018/221357 A1 | 06 December 2018 | US 2020/0087554 A1<br>claims 1-19, paragraphs<br>[0563]-[0680]<br>EP 3632848 A1<br>CN 110582465 A<br>KR 10-2019-0141741 A | |
| JP 2010-264359 A | 25 November 2010 | (Family: none) | |
| CN 102600854 A | 25 July 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Ind. Eng. Chem. Res.*, 2013, vol. 52, 8416-8426